# FASCICULE DE BREVET EUROPEEN

(11) **EP 1 960 265 B1**
(45) Date de publication et mention de la délivrance du brevet: **22.07.2009**
(21) Numéro de dépôt: 06820215.9
(22) Date de dépôt: 13.10.2006
(51) Int. Cl.: B64D 1/16

(54) **RESERVOIR AEROTRANSPORTABLE DE STOCKAGE D'UN PRODUIT A LARGUER EN VOL**
IN DER LUFT TRANSPORTIERBARER TANK ZUR LAGERUNG EINES IM FLUG ABZUWERFENDEN PRODUKTS
AIRLIFTABLE TANK FOR STORING A PRODUCT THAT IS TO BE JETTISONED DURING FLIGHT

(30) Priorité: 14.12.2005 FR 0512706
(43) Date de publication de la demande: 27.08.2008
(73) Titulaire: EUROCOPTER, 13725 Marignane Cédex (FR)
(72) Inventeur: OLIVE, Richard, F-13500 Martigues (FR); DENANTE, Marc, F-13007 Marseille (FR)
(74) Mandataire: Pouillot, Laurent Pierre Paul
(86) Numéro de dépôt international: PCT/FR2006/002317
(87) Numéro de publication internationale: WO 2007/068806

(56) Documents cités:
- US-A- 2 991 815
- US-A- 3 603 506
- US-A- 3 661 211

## Description

La présente invention est relative à un réservoir aérotransportable de stockage d'un produit à larguer en vol, et à un dispositif de lutte contre les incendies incorporant un tel réservoir.

Le domaine technique de l'invention est celui de la fabrication de dispositifs aéroportables de lutte contre les incendies.

La présente invention est plus particulièrement relative à un réservoir aérotransportable d'un produit fluide ou pulvérulent utilisé dans la lutte contre les incendies, à un dispositif incorporant un tel réservoir, et à un aéronef - giravion notamment - équipé de ce réservoir et/ou de ce dispositif.

La présente invention concerne notamment un conteneur ou citerne souple embarquable à bord d'un hélicoptère, destiné à contenir un liquide - tel que de l'eau - à larguer en vol.

Il est connu de fixer sous le fuselage d'un hélicoptère, un dispositif de lutte contre les incendies, qui comporte un réservoir de stockage d'eau qui est équipé de trappes dont l'ouverture libère l'eau stockée dans le réservoir ; ces dispositifs ont notamment pour inconvénient de réduire la garde au sol de l'hélicoptère, et de présenter une faible capacité de stockage.

La demande internationale WO 2005/014394 décrit un hélicoptère équipé de réservoirs et d'une lance d'aspersion, qui sont disposés à l'intérieur du fuselage.

Le brevet US 3603506 décrit un dispositif d'aspersion en vol d'un produit chimique contenu dans une enveloppe souple qui peut être installée de façon amovible à l'intérieur d'un avion ; l'enveloppe est maintenue en place par un filet.

La demande de brevet FR 2829103 décrit un dispositif amovible de stockage d'eau à l'intérieur de la carlingue d'un aéronef, qui comporte un réservoir souple, une trappe d'évacuation d'eau, et des vérins appuyant sur le réservoir et servant à expulser l'eau par la trappe.

D'une façon générale, il a été constaté que les aéronefs équipés d'un réservoir en cabine peuvent difficilement être utilisés à un usage autre que la lutte contre le feu à cause du temps et du coût nécessaire au montage et au démontage du système embarqué de lutte contre le feu.

La présente invention a pour objet de proposer un réservoir aérotransportable de stockage d'un produit (ou composition) à larguer en vol qui soit amélioré et/ou qui remédie, en partie au moins, aux lacunes ou inconvénients des réservoirs aérotransportables connus.

L'invention a également pour objet de proposer un dispositif de lutte contre les incendies comprenant un tel réservoir, ainsi qu'un aéronef équipé d'un tel réservoir ou d'un tel dispositif.

Conformément à un aspect de l'invention, il est proposé un tel réservoir qui comporte un col terminé par une ouverture d'évacuation, et dont la (les) paroi(s) prolongeant le col est (sont) suffisamment déformable(s) pour être, en partie au moins, logée(s) à l'intérieur du col.

En d'autres termes, il est proposé un réservoir dont les parois délimitent une ouverture d'évacuation du produit stocké dans le réservoir ; le réservoir comporte une première partie - ou col - qui s'étend à partir de l'ouverture et qui présente un premier volume, ainsi qu'une seconde partie délimitée par une (des) paroi(s) prolongeant la (les) paroi(s) de la première partie, et qui présente dans une configuration déployée un second volume supérieur au premier volume, par exemple supérieur au triple ou au quintuple du premier volume ; la (les) paroi(s) de la seconde partie complétant la première partie, présente(nt) une souplesse suffisante pour être, en partie ou en totalité, repliée à l'intérieur du col.

Lorsque l'on installe à bord d'un aéronef le réservoir selon l'invention, on dispose le col du réservoir dans un « puit ventral » de l'aéronef, c'est-à-dire un compartiment s'étendant sous le plancher (de la cabine) et débouchant sur les parois ou capots externes du fuselage, l'orifice d'évacuation du réservoir s'étendant sensiblement au niveau (dans le prolongement) de ces parois ou capots, ou bien sous celles-ci.

Lorsque le réservoir est vide et non utilisé, il est en grande partie au moins contenu sous le plancher, de sorte que la cabine est disponible pour son usage habituel ; lorsque l'aéronef est utilisé pour la lutte contre les incendies, la partie repliable du réservoir est déployée à l'intérieur de la cabine et est remplie du produit à larguer en vol ; après largage, le réservoir peut être à nouveau escamoté sous le plancher de la cabine.

Le col peut être constitué - ou bien peut se terminer - par une portion divergente ; l'ouverture d'évacuation peut être équipée d'un mécanisme de largage à volets mobiles.

L'invention s'applique notamment aux réservoirs de capacité située dans une plage allant de 0,5m³ environ à 20m³ environ, en particulier allant de 1 m³ ou 2m³ environ jusqu'à 5 ou 10m³ environ.

La partie - ou paroi - repliable et déployable du réservoir peut être réalisée en partie au moins dans un matériau présentant au moins une couche de matière plastique.

Le réservoir peut comporter une cloison séparant deux compartiments du réservoir. Une telle cloison, qui est de préférence étanche, peut séparer un compartiment principal communiquant avec l'ouverture d'évacuation du produit stocké, d'un compartiment secondaire ne communiquant pas avec cette ouverture.

Le compartiment secondaire peut être mis en communication avec l'extérieur par un orifice secondaire.

Le compartiment secondaire peut être conçu pour recevoir un fluide secondaire de remplissage, tel que de l'air, de densité inférieure à la densité du produit de lutte contre les incendies.

Le compartiment secondaire peut être arrangé pour recouvrir le col lorsque la (les) paroi(s) délimitant le compartiment est (sont) repliée(s) dans le col.

Les première et seconde parties du réservoir peuvent former une seule pièce ; alternativement, ces deux parties sont distinctes et/ou séparables ; dans ce cas notamment, la paroi de la première partie - ou pièce - peut être rigide, en particulier réalisée dans un matériau composite (résine renforcée de fibres par exemple), et peut être assemblée de façon étanche à la seconde pièce - ou bâche - par l'intermédiaire de brides.

L'invention propose aussi un dispositif aérotransportable de lutte contre les incendies, qui comporte un réservoir selon l'invention et une structure déformable de maintien du réservoir lorsque celui-ci est déployé à l'intérieur de la cabine d'un aéronef.

La structure de maintien peut comporter des liens filiformes tels que sangles ou filet(s), qui sont prévus pour relier la paroi déformable du réservoir au plancher ou au plafond de la cabine.

La structure déformable de maintien peut comporter des moyens de maintien d'inclinaison pour maintenir une portion de la (des) paroi(s) déformable(s) du réservoir entourant le col, dans une position inclinée favorisant l'écoulement du produit stocké vers le col.

Les moyens de maintien d'inclinaison peuvent comporter une structure - formant une cale ou un coin - gonflable prévue pour s'étendre entre le plancher de la cabine et la paroi du réservoir, à proximité du col.

La structure gonflable de maintien d'inclinaison peut être arrangée pour entourer tout ou partie du col du réservoir.

La structure déformable de maintien peut comporter des moyens de cerclage, qui peuvent être gonflables, conçus pour entourer au moins la base du réservoir et pour reposer - directement ou indirectement - sur le plancher de la cabine.

Les moyens de cerclage gonflables peuvent comporter plusieurs compartiments étanches superposés.

L'invention propose également un aéronef comportant un fuselage, une cabine, des parois de fuselage, un plancher de cabine, un compartiment ou puit ventral s'étendant entre le plancher de la cabine et les parois de fuselage, l'aéronef étant équipé d'un réservoir ou d'un dispositif selon l'invention, le col du réservoir s'étendant dans le compartiment ou puit ventral.

L'aéronef peut comporter en outre un conduit externe d'aspiration équipé d'une pompe, un conduit interne de remplissage du réservoir qui relie le conduit externe d'aspiration à un orifice de remplissage prévu- dans une paroi déformable du réservoir, et le cas échéant un conduit de surverse également relié au réservoir.

L'invention permet d'embarquer une quantité importante d'eau et d'optimiser le largage en vol. L'invention limite les contraintes d'atterrissage en terrain non préparé, facilite le remplissage rapide au sol et en vol. L'invention permet de conserver la polyvalence de l'aéronef, évite ou du moins limite les répercussions de la présence d'un réservoir embarqué sur les qualités de vol. L'invention permet de passer rapidement d'un aménagement de la cabine adapté au largage en vol du produit stocké, à un aménagement adapté au transport de passagers et/ou de matériels divers ; dans les deux cas, l'aéronef se prête à des opérations d'évacuation sanitaire par treuillage ou élingage.

Le réservoir souple maintenu dans la cabine de l'hélicoptère par une structure gonflable à l'air permet d'emmagasiner une quantité d'eau suffisante pour rendre plus efficace la mission lutte incendie. Le largage s'effectue par le biais d'un puit dans la structure de l'hélicoptère et de trappes de largage. Le réservoir se vide rapidement par déformation, ce qui peut permettre de s'affranchir d'un système de mise à l'air libre du réservoir. Le dégonflage de la structure et le rangement de l'ensemble permettent de libérer la cabine et de rendre rapidement l'aéronef capable d'autres missions.

D'autres aspects, caractéristiques, et avantages de l'invention apparaissent dans la description suivante, qui se réfère aux dessins annexés et qui illustre, sans aucun caractère limitatif, des modes préférés de réalisation de l'invention.

La figure 1 illustre, en vue en perspective schématique avec arrachement, un hélicoptère équipé d'un dispositif de lutte contre le feu selon l'invention. Les figures 7 à 11 illustrent de la même façon, sous différents angles de vue, des étapes de montage du dispositif à bord de l'hélicoptère ; les figures 7 et 9 illustrent respectivement, en outre, des caractéristiques d'un puit « ventral » et d'un dispositif de calage de réservoir.

Les figures 2 et 3 illustrent, respectivement en vue de côté et en vue de dessus, un dispositif de lutte contre le feu similaire à celui de la figure 1, embarqué sur un hélicoptère.

Les figures 4 à 6 illustrent, en vue en coupe schématique, un mode préféré de réalisation d'un dispositif selon l'invention, et son implantation dans un aéronef ; la figure 4 est une vue en coupe longitudinale, tandis que les figures 5 et 6 sont des vues en coupe transversales, respectivement selon V-V et selon VI-VI, du dispositif de la figure 4.

La figure 12 est une vue en perspective schématique d'un autre mode de réalisation de l'invention.

Les figures 13 à 15 illustrent en vue de côté simplifiée, la structure et le fonctionnement d'un réservoir selon l'invention.

La figure 16 est une vue en coupe avec arrachement de la liaison entre deux pièces formant un réservoir selon un autre mode de réalisation de l'invention.

Sauf indication contraire, des repères identiques désignent des éléments ou organes structurellement ou fonctionnellement identiques ou équivalents (similaires).

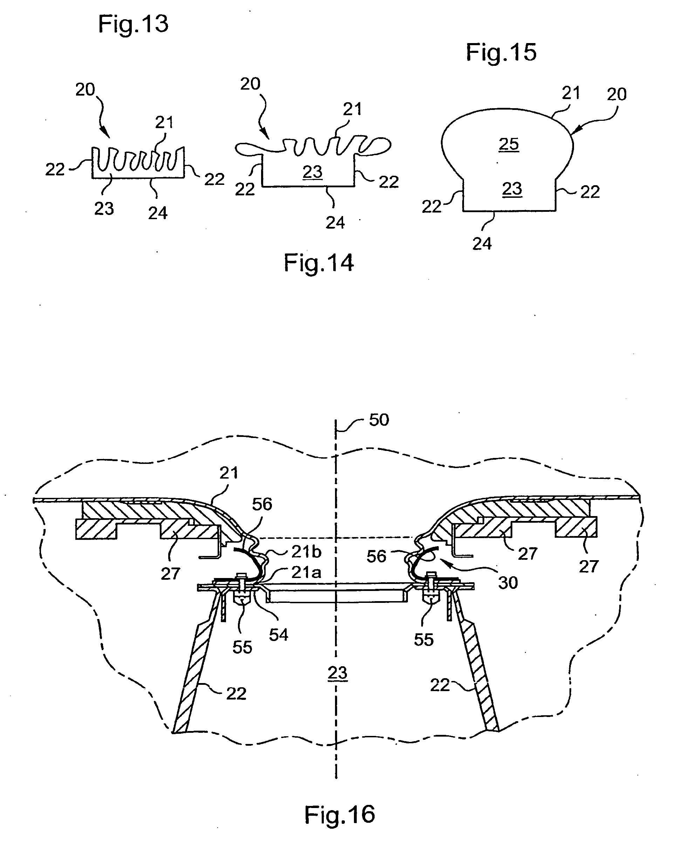

Par référence aux figures 13 à 15, le réservoir 20 comporte une paroi souple 21 prolongeant une paroi 22 qui peut être souple ou rigide ; la paroi 22 délimite une partie 23 étroite - ou col - du conteneur 20, qui se termine par une ouverture 24 d'évacuation. Dans sa configuration déployée illustrée figure 15, la paroi 21 délimite un compartiment principal 25 qui communique avec l'ouverture 24 par l'intermédiaire du col 23 : le volume du compartiment 25 peut atteindre ou dépasser le décuple de celui du col 23.

Dans la configuration d'escamotage partiel illustrée figure 14, le volume délimité par la paroi 21 est fortement diminué ; dans sa configuration repliée illustrée figure 13, la paroi 21 est contenue à l'intérieur du volume 23 délimité par les parois 22.

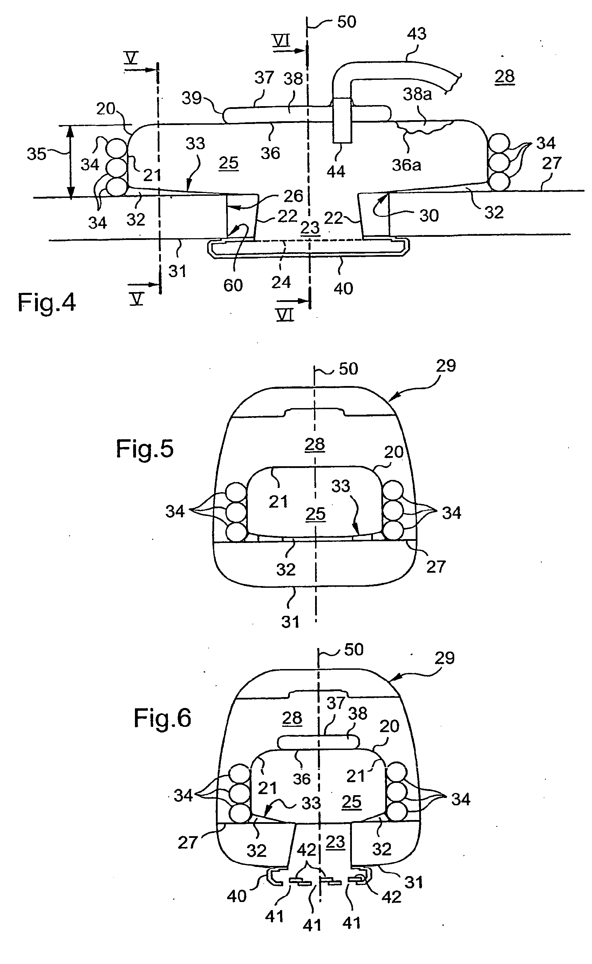

Par référence aux figures 4 à 6, le col 23 du réservoir 20 est inséré dans un puit 26 s'étendant verticalement, selon un axe 50, depuis une ouverture 30 prévue dans le plancher 27 de la cabine 28 de l'aéronef 29, jusqu'à une ouverture 60 prévue dans la partie « ventrale » du fuselage 31 de l'aéronef.

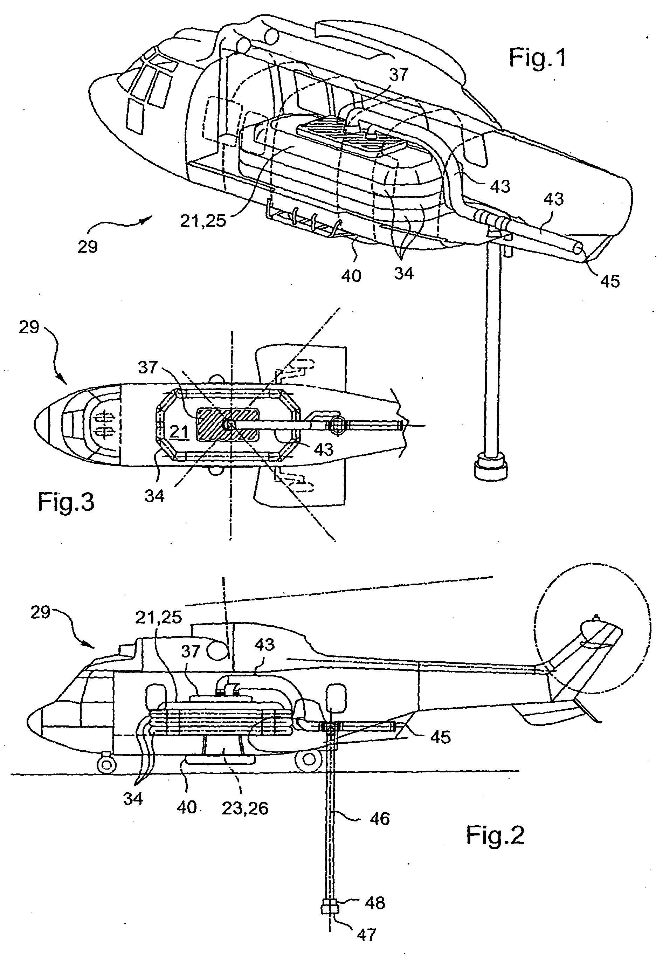

La paroi souple 21 repose sur le plancher 27 par l'intermédiaire d'un matelas gonflable 32 de conformation du « fond » 33 du compartiment 25 ; la paroi souple 21 est entourée (voir également figures 1 et 3 notamment) par trois boudins ou ceintures gonflables 34 superposé(e)s qui limitent l'étalement de la paroi 21 dans la cabine.

Selon une variante de réalisation, le matelas 32 comporte un ou plusieurs blocs d'une matière alvéolaire et/ou d'une mousse d'une matière plastique.

Ces ceintures 34 s'étendent sur une partie de la hauteur 35 du compartiment 25 lorsque la paroi 21 est déployée.

La partie supérieure centrale 36 de la paroi délimitant le compartiment principal 25 est recouverte d'une paroi 37 délimitant, avec la paroi 36, un compartiment secondaire 38 étanche muni d'une ouverture 39 obturable ; ce compartiment secondaire peut être rempli d'air sous pression pour former un matelas servant, lorsque la paroi 21 est escamotée dans le compartiment 26 (dans le col 23), à obturer l'orifice 30 et assurer une continuité du plancher 27.

Au moins un autre compartiment secondaire gonflable (à l'air) 38a peut être prévu dans le réservoir 20, étant séparé du compartiment 25 principal par une cloison étanche 36a déformable (cf. figure 4) ; ceci permet de réduire la capacité utile du compartiment 25 lorsque le compartiment 38a est rempli d'air.

Cela permet d'adapter la capacité du réservoir principal 25 aux performances de l'aéronef, qui peuvent être volontairement réduites en fonction de l'altitude des opérations à réaliser et/ou de la distance à parcourir par l'aéronef entre le lieu de chargement du réservoir embarqué et le lieu de largage.

Une structure 40 d'obturation de l'orifice 24 d'évacuation est reliée à l'embouchure du col 23 de façon étanche ; cette structure comporte des ouvertures 41 de largage obturables par des volets 42 mobiles (figure 6) sous l'action d'un actionneur tel qu'un vérin (non représenté) permettant d'ouvrir ou de fermer ces ouvertures.

Un conduit interne d'aspiration 43 dont une extrémité 44 s'étend dans le réservoir 25, permet le remplissage de celui-ci.

Par référence aux figures 1 à 3, le conduit 43 présente (à cet effet) à son extrémité arrière, un raccord 45 de remplissage au sol.

Une bifurcation en T 46 est insérée sur le conduit 43 pour le raccorder à un conduit externe 46 d'aspiration permettant, par son extrémité inférieure 47, le remplissage en vol du conteneur de produit à larguer, grâce à une pompe 48.

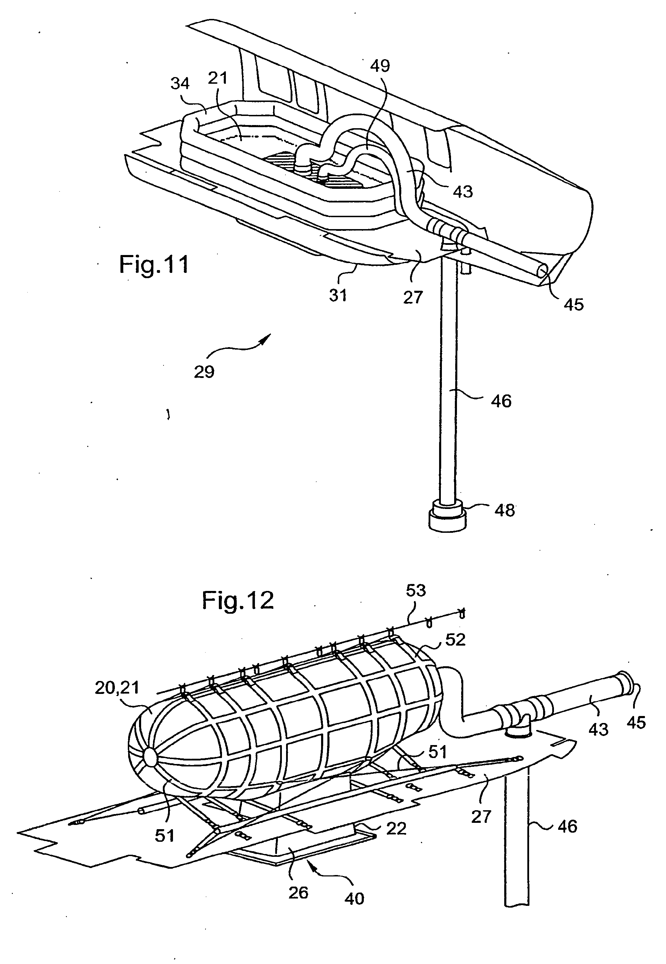

Par référence aux figures 1 et 11 notamment, un conduit 49 de surverse est également mis en communication avec le réservoir 25.

Par référence aux figures 1 à 3, 10 et 11 en particulier, le dispositif selon l'invention comporte un réservoir 20 souple d'une capacité de l'ordre de 4000 litres par exemple, qui est posé sur le plancher cabine, un système (40 à 42) de largage positionné sous le fuselage couplé au réservoir, ainsi qu'un système de remplissage et de mise à l'air du réservoir 20. Un réservoir (non représenté) de plus petite capacité, destiné à recevoir un produit additif à mélanger au produit contenu dans le réservoir 20 avant le largage du mélange obtenu, peut être installé à bord et raccordé au réservoir 20.

Les organes de remplissage incluant la pompe 48 et les conduits 43, 46 et 49, sont reliés de façon amovible au réservoir et à la structure de l'aéronef, pour limiter les problèmes de garde au sol ; lorsque ces organes sont désolidarisés du réservoir, ils peuvent être rangés dans une soute de l'aéronef, afin d'éviter de géner l'accés à la cabine et pour faciliter la fermeture de portes, par exemple coulissantes, d'accès à la cabine.

Le réservoir 20 peut être essentiellement constitué d'une bâche souple de forme grossièrement parallélépipédique, qui est reliée de façon étanche au système de largage. La liaison entre la bâche 21 et les organes 40 à 42 de largage est réalisée par le manchon 22 (délimitant le col 23) qui peut être réalisé dans un matériau de même nature que celui des parois de la bâche, et peut être intégré à celle-ci ; ce manchon présente une forme adaptée pour épouser la forme intérieure du puit ventral 26.

Les parois 36 et 37 forment (cf. figure 4) un coussin gonflable 38 intégré à la bâche, qui permet de recouvrir et/ou d'obturer l'ouverture 30 formée dans le plancher 27, lorsque le réservoir 23, 25 est vide et replié dans le puits 26, et que l'aéronef est utilisé pour du transport de personnes ou de matériels divers.

Ce coussin peut être relié à la structure de l'aéronef par des sangles le maintenant parallèle au plancher quand le réservoir est rempli de liquide, afin de réduire les effets du ballottement de ce liquide.

Afin de limiter encore, en vol, la déformation et/ou le déplacement du réservoir rempli, sous l'effet des forces d'inertie résultant de la masse du produit fluide contenu dans le réservoir, et des accélérations de l'aéronef, le réservoir peut comporter plusieurs compartiments qui sont séparés (totalement ou partiellement) par une ou plusieurs cloisons souples, solidaires des parois 21 de l'enveloppe, qui peuvent s'étendre sensiblement verticalement.

On peut prévoir une liaison par des sangles 51, un filet 52 (figure 12), ou un moyen équivalent, de la partie inférieure et/ou supérieure du réservoir avec la structure porteuse, notamment pour guider le mouvement de descente de la paroi 36 et de repliage de la partie supérieure du réservoir, lors du largage du produit qu'il contient.

Le coussin gonflable obturateur peut être maintenu par des sangles ancrées sur la structure de l'hélicoptère. Le coussin comporte un ou plusieurs raccords pour la tuyauterie (non représentée) de remplissage et/ou de mise à l'air/surverse du compartiment 38 qu'il délimite.

En cas de besoin de transport de personnes ou de biens, il suffit de vidanger le réservoir 23, 25, dégonfler les ceintures 34 et le matelas 32 (lorsque celui-ci est gonflable), placer la paroi 21 dans le col 23, et fermer ou recouvrir l'ouverture 30 par le « coussin » 36 à 38.

En cas d'urgence, il peut être suffisant de vidanger le(s) réservoir(s), de dégonfler les ceintures 34, et d'étaler la paroi 21 sur le plancher de la cabine, cette paroi étant conçue pour résister au piétinement des passagers et étant en grande partie protégée par le coussin 38.

Comme illustré figures 4 à 6 et 9 à 11 en particulier, le réservoir souple est maintenu en place dans la cabine par une structure gonflable comportant :
- une ceinture de plusieurs boudins 34 gonflables superposés, réalisés par exemple en PV.C souple et résistant, et entourant le réservoir ; ces boudins peuvent s'appuyer par leur face externe sur les éléments de la structure de l'aéronef ; des sangles de retenue du réservoir selon un axe longitudinal de l'aéronef peuvent être prévues ; lorsque le réservoir est plus étroit que la cabine, la ceinture gonflable peut être maintenue par des sangles attachées à la structure aéronef ; et
- un plancher 32 gonflable donnant une forme de « pointe de diamant » au fond 33 du réservoir 25 et permettant un écoulement de l'eau dans le puit 26 quelle que soit l'assiette de l'hélicoptère.

L'ensemble du système de maintien de la bâche peut être dégonflé pour rendre disponible le plancher de la cabine afin de transporter du personnel et/ou du matériel.

Lors de l'installation, c'est ce même ensemble qui est installé par le dessous de l'hélicoptère à l'intérieur du puit. Pour des raisons d'encombrement, les éléments du système de remplissage peuvent être installés dans la cabine.

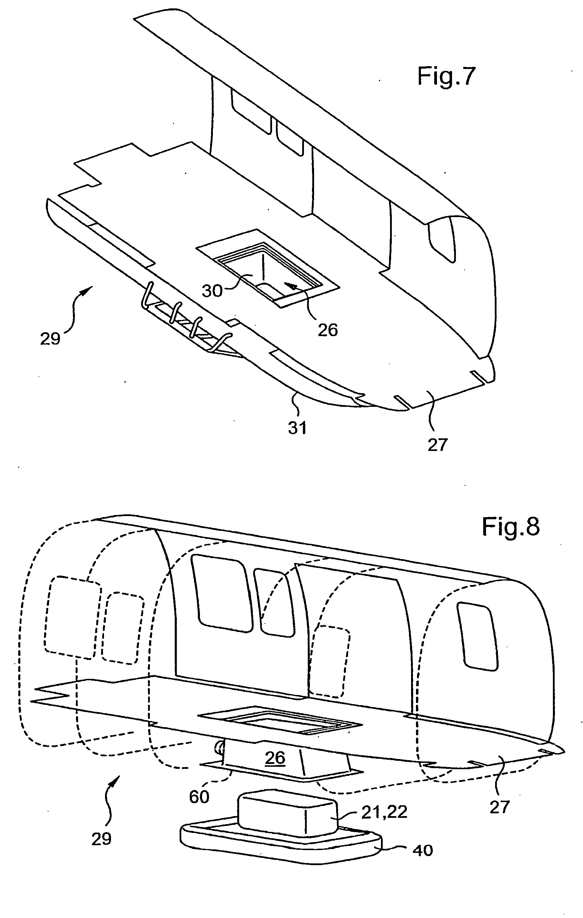

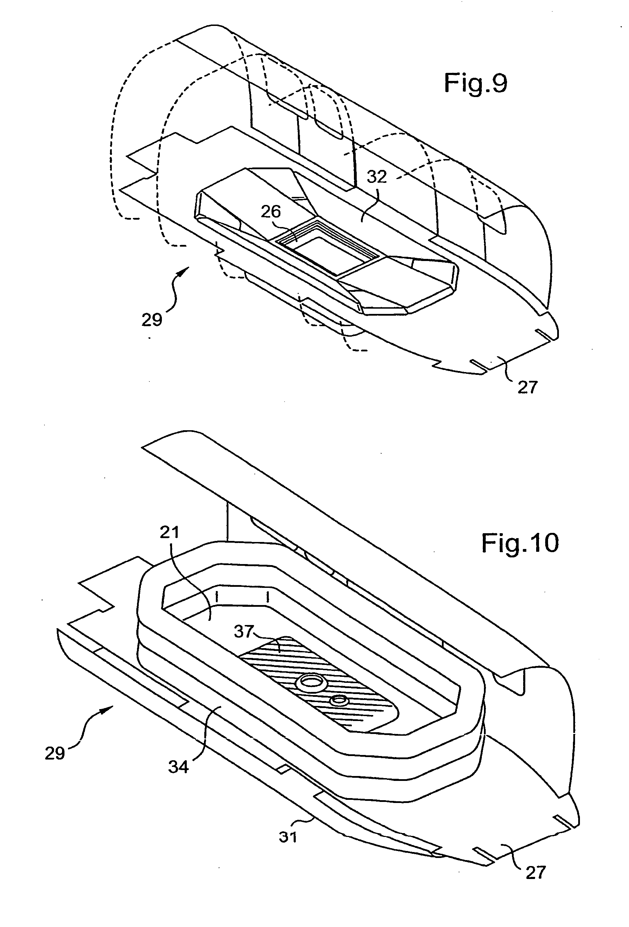

Par référence aux figures 7 à 11 en particulier, l'installation du dispositif à bord d'un hélicoptère équipé d'un puit ventral 26 (figure7), peut comporter les opérations suivantes :
- introduction (figure 8) dans le puit ventral et fixation à l'aéronef de l'ensemble réservoir/système de largage ;
- mise en place autour du puit, dépliage, fixation et gonflage du matelas 32 destiner à supporter le réservoir (figure 9);
- dépliage des parois 21, 36 de la bâche sur le plancher 27 et gonflage du coussin (36 à 38) obturateur inclus dans la bâche ;
- dépliage, fixation et gonflage de la ceinture 34 (figure10) ;
- le cas échéant fixation de la bâche sur la ceinture 34 et sur la structure de l'appareil 29 ;
- raccordement des conduits de remplissage et mise à l'air/sur verse 43, 49 (figure 11), au compartiment principal 25 au moins du réservoir.

Après exécution d'une mission comportant un largage du produit contenu dans le réservoir, un dégonflage de la ceinture et du plancher permet une utilisation de l'essentiel du volume de la cabine de l'aéronef.

Le fait d'attacher la bâche 21 à un ou plusieurs boudins 34, au voisinage de la demi hauteur 35 de la bâche déployée, facilite le repli de la bâche sur elle-même lors de la vidange du réservoir 25.

Pour passer à une configuration d'utilisation ordinaire de l'aéronef, on procède ensuite au démontage des ensembles de remplissage et de surverse, au pliage et au rangement de la ceinture et du plancher, au pliage et au rangement de l'ensemble réservoir (bâche) dans le puit ménagé dans la barque, et à la fermeture du puit par le plancher obturateur.

Dans la variante illustrée figure 12, le réservoir souple est accroché à un rail 53 horizontal équipant la cabine en partie supérieure, et maintenu sur le plancher cabine par un système de sanglage.

Comme décrit précédemment, la connexion entre le reservoir et le système 40 de largage se fait dans l'espace disponible d'un puit ventral.

Le réservoir est maintenu par un maillage de sangles accrochées à des points d'ancrage de la structure par des mousquetons, et par deux couples de sangles se croisant en partie inférieure du réservoir.

Par référence à la figure 16, le réservoir comporte une paroi rigide 22 solidaire de la structure de l'aéronef et présentant une forme sensiblement tronconique d'axe 50, évasée vers le bas ; cette paroi est équipée à son sommet d'une bride 54 percée d'orifices de passage de vis 55 ; la paroi souple 21 du réservoir se termine par un soufflet 21b et une collerette 21a ; cette collerette s'étend entre la bride 54 et une contre bride 56 également percée d'orifices de passage des vis 55 ; le serrage de ces vis permet d'assurer une liaison étanche entre les parois 21 et 22.

Il va sans dire que divers ajouts, omissions, ou modifications pourront être apportés par l'homme du métier aux différents modes de réalisation décrits ci avant, tant dans leurs éléments structurels que dans leurs composantes fonctionnelles, sans sortir du cadre de la présente invention.

## Revendications

1. Réservoir (20) de stockage d'un produit à larguer en vol,
**caractérisé en ce qu'**il comporte un col (23) terminé par une ouverture (24) d'évacuation du produit ainsi qu'une paroi (21) prolongeant le col, et **en ce que** la paroi (21) est suffisamment déformable pour être logée en partie ou en totalité à l'intérieur du col.

2. Réservoir selon la revendication 1 qui comporte une première partie et une seconde partie, au moins une paroi de la seconde partie prolongeant une paroi de la première partie, la première partie comportant le col, s'étendant à partir de l'ouverture et présentant un premier volume, la seconde partie présentant dans une configuration déployée un second volume supérieur au premier volume, la (les) paroi(s) de la seconde partie présentant une souplesse suffisante pour être repliée, en partie au moins, à l'intérieur de la première partie.

3. Réservoir selon la revendication 1 ou 2 qui comporte une première pièce (22) rigide délimitant, en partie au moins, le col, ainsi qu'une seconde pièce séparable de la première pièce et comportant la paroi déformable (21).

4. Réservoir selon l'une quelconque des revendications 1 à 3 dont l'ouverture d'évacuation est équipée d'un mécanisme de largage à volets (42) mobiles, et dont le col se termine par une portion divergente.

5. Réservoir selon l'une quelconque des revendications 1 à 4, dont la capacité est situé dans une plage allant de 0,5m³ environ à 20m³ environ, et dont la paroi repliable et déployable est réalisée, en partie au moins, dans un matériau présentant au moins une couche de matière plastique.

6. Réservoir selon l'une quelconque des revendications 1 à 5, qui comporte une cloison (36, 36a) séparant deux compartiments (25, 38, 38a) du réservoir.

7. Réservoir selon l'une quelconque des revendications 1 à 6, dans lequel une cloison (36, 36a) étanche sépare un compartiment principal (25) communiquant avec l'ouverture d'évacuation du produit stocké, d'un compartiment secondaire (38, 38a) ne communiquant pas avec cette ouverture.

8. Réservoir selon la revendication7, dans lequel le compartiment secondaire peut être mis en communication avec l'extérieur par un orifice (39) secondaire.

9. Réservoir selon la revendication 7 ou 8, dans lequel le compartiment secondaire est conçu pour recevoir un fluide secondaire de remplissage de densité inférieure à la densité du produit à larguer en vol.

10. Réservoir selon la revendication 9 dans lequel le fluide secondaire de remplissage est de l'air.

11. Réservoir selon l'une quelconque des revendications 7 à 10, dans lequel le compartiment secondaire est arrangé pour recouvrir le col lorsque la (les) paroi(s) délimitant le compartiment principal est (sont) repliée(s) dans le col.

12. Dispositif de stockage d'un produit, transportable par un aéronef (29) comportant une cabine (28), qui comporte :
- un réservoir selon l'une quelconque des revendications 1 à 11, et
- une structure (32, 34) de maintien du réservoir lorsque celui-ci est déployé à l'intérieur de la cabine.

13. Dispositif selon la revendication 12, dans lequel la structure de maintien comporte des liens filiformes tels que sangles ou filet(s), qui sont prévus pour relier la paroi déformable du réservoir au plancher ou au plafond de la cabine.

14. Dispositif selon la revendication 12 ou 13 dans lequel la structure de maintien comporte des moyens (32) de maintien d'inclinaison pour maintenir une portion (33) de la (des) paroi(s) déformable(s) du réservoir entourant le col, dans une position inclinée favorisant l'écoulement du produit stocké vers le col.

15. Dispositif selon la revendication 14, dans lequel les moyens de maintien d'inclinaison comportent une structure - formant une cale ou un coin - prévue pour s'étendre entre le plancher (27) de la cabine et la paroi du réservoir, à proximité du col.

16. Dispositif selon la revendication 15, dans lequel la structure de maintien d'inclinaison est en partie au moins gonflable et arrangée pour entourer tout ou partie du col du réservoir.

17. Dispositif selon l'une quelconque des revendications 12 à 16 dans lequel la structure de maintien comporte des moyens (34) de cerclage conçus pour entourer au moins la base du réservoir et pour reposer directement ou indirectement - sur le plancher de la cabine.

18. Dispositif selon la revendication 17, dans lequel les moyens de cerclage sont gonflables et comportent plusieurs compartiments étanches superposés.

19. Dispositif selon l'une quelconque des revendications 15 à 18, dans lequel la structure de maintien d'inclinaison comporte un ou plusieurs blocs de matière alvéolaire.

20. Dispositif selon l'une quelconque des revendications 12 à 19, dans lequel un compartiment secondaire gonflable du réservoir permet de recouvrir et/ou obturer le col et/ou une ouverture (30) formée dans le plancher de la cabine.

21. Aéronef (29) comportant un fuselage (31), une cabine (28), des parois de fuselage, un plancher (27) de cabine, un compartiment ou puit ventral (26) s'étendant entre le plancher de la cabine et les parois de fuselage, l'aéronef étant équipé d'un réservoir selon l'une quelconque des revendications 1 à 11 ou d'un dispositif selon l'une quelconque des revendications 12 à 20, le col (23) du réservoir s'étendant, en partie au moins, dans le compartiment ou puit ventral.

22. Aéronef selon la revendication 21 qui comporte en outre un conduit (46) externe d'aspiration équipé d'une pompe (48), un conduit interne (43) de remplissage du réservoir qui relie le conduit externe d'aspiration à un orifice de remplissage prévu dans une paroi déformable du réservoir, et le cas échéant un conduit (49) de surverse également relié au réservoir.

## Claims

1. A tank (20) for storing a product that is to be jettisoned during flight, **characterised in that** it comprises a neck (23) ending in an opening (24) for evacuation of the product, and a wall (21) that extends the neck, and **in that** the wall (21) is sufficiently deformable to be accommodated partly or wholly within the neck.

2. A tank according to claim 1, comprising a first part and a second part, at least one wall of the second part extending a wall of the first part, the first part comprising the neck, extending from the opening and having a first volume, the second part having in an unfolded configuration a second volume that is greater than the first volume, the wall(s) of the second part having sufficient flexibility to be folded, at least partly, inside the first part,

3. A tank according to claim 1 or 2, comprising a first rigid piece (22) which at least partly defines the neck, and a second piece which is detachable from the first piece and comprises the deformable wall (21).

4. A tank according to any one of claims 1 to 3, of which the evacuation opening is provided with a jettison gear having movable flaps (42), and of which the neck ends in a divergent portion.

5. A tank according to any one of claims 1 to 4, of which the capacity lies within a range from approximately 0.5 m³ to approximately 20 m³, and of which the foldable and unfoldable wall is at least partly made of a material comprising at least one layer of a plastics material.

6. A tank according to any one of claims 1 to 5, comprising a partition (36, 36a) separating two compartments (25, 38, 38a) of the tank,

7. A tank according to any one of claims 1 to 6, wherein a sealed partition (36, 36a) separates a main compartment (25), communicating with the opening for evacuation of the stored product, from a secondary compartment (38, 38a) not communicating with this opening.

8. A tank according to claim 7, wherein the secondary compartment can communicate with the outside via a secondary opening (39).

9. A tank according to claim 7 or 8, wherein the secondary compartment is designed to receive a secondary filling fluid having a density which is lower than the density of the product that is to be jettisoned during flight,

10. A tank according to claim 9, wherein the secondary filling fluid is air.

11. A tank according to any one of claims 7 to 10, wherein the secondary compartment is arranged to cover the neck when the wall(s) defining the main compartment is (are) folded inside the neck.

12. A device for storing a product, transportable by an aircraft (29) comprising a cabin (28), which comprises:
- a tank according to any one of claims 1 to 11; and
- a structure (32, 34) for holding the tank when the latter is unfolded inside the cabin,

13. A device according to claim 12, wherein the holding structure comprises linear connectors such as straps or string(s) which are provided to connect the deformable wall of the tank to the floor or the ceiling of the cabin.

14. A device according to claim 12 or 13, wherein the holding structure comprises inclined holding means (32) for holding a portion (33) of the deformable wall(s) of the tank surrounding the neck in an inclined position, favouring the flow of the stored product towards the neck.

15. A device according to claim 14, wherein the inclined holding means comprise a structure - forming a block or a wedge - provided to extend between the floor (27) of the cabin and the wall of the tank, in the vicinity of the neck.

16. A device according to claim 15, wherein the inclined holding structure is at least partly inflatable and arranged so as to surround all or part of the neck of the tank.

17. A device according to any one of claims 12 to 16, wherein the holding structure comprises looping means (34) designed to surround at least the base of the tank and to rest directly or indirectly on the floor of the cabin.

18. A device according to claim 17, wherein the looping means are inflatable and comprise a plurality of superimposed sealed compartments.

19. A device according to any one of claims 15 to 18, wherein the inclined holding structure comprises one or more blocks of alveolar material.

20. A device according to any one of claims 12 to 19, wherein an inflatable secondary compartment of the tank allows the neck and/or an opening (30) formed in the floor of the cabin to be covered and/or sealed.

21. An aircraft (29) comprising a fuselage (31), a cabin (28), fuselage walls, a cabin floor (27), a lower compartment or shaft (26) extending between the floor of the cabin and the fuselage walls, the aircraft being provided with a tank according to any one of claims 1 to 11 or a device according to any one of claims 12 to 20, the neck (23) of the tank extending at least partly within the lower compartment or shaft,

22. An aircraft according to claim 21, additionally comprising an external suction pipe (46) provided with a pump (48), an internal tank-filling pipe (43) which connects the external suction pipe to a filling opening provided in a deformable wall of the tank and, if the situation arises, an overflow pipe (49) likewise connected to the tank.

## Patentansprüche

1. Behälter (20) zur Lagerung eines im Flug abzuwerfenden Produkts, **dadurch gekennzeichnet, dass** er einen Hals (23), der in einer Entleerungsöffnung (24) des Produkts endet, sowie eine den Hals verlängernde Wand (21) aufweist, und dass die Wand (21) verformbar genug ist, um zum Teil oder vollständig innerhalb des Halses angeordnet zu werden.

2. Behälter nach Anspruch 1, der einen ersten Teil und einen zweiten Teil aufweist, wobei mindestens eine Wand des zweiten Teils eine Wand des ersten Teils verlängert, wobei der erste, den Hals aufweisende Teil sich ausgehend von der Öffnung erstreckt und ein erstes Volumen hat, wobei der zweite Teil in einer entfalteten Konfiguration ein zweites Volumen größer als das erste Volumen hat, wobei die Wand (die Wände) des zweiten Teils eine ausreichend Geschmeidigkeit aufweist (aufweisen), um zumindest zum Teil im Inneren des ersten Teils zusammengefaltet zu werden.

3. Behälter nach Anspruch 1 oder 2, der ein erstes steifes Bauteil (22), das zumindest zum Teil den Hals begrenzt, sowie ein zweites, vom ersten trennbares und die verformbare Wand (21) aufweisendes Bauteil aufweist.

4. Behälter nach einem der Ansprüche 1 bis 3, dessen Entleerungsöffnung mit einem Abwurfmechanismus mit beweglichen Klappen (42) ausgestattet ist und dessen Hals in einem divergierenden Abschnitt endet.

5. Behälter nach einem der Ansprüche 1 bis 4, dessen Kapazität sich in einem Bereich befindet, der von etwa 0,5 m³ bis etwa 20 m³ geht, und dessen zusammenfaltbare und entfaltbare Wand zumindest zum Teil aus einem Werkstoff hergestellt ist, der mindestens eine Schicht aus Kunststoff hat.

6. Behälter nach einem der Ansprüche 1 bis 5, der eine Trennwand (36, 36a) aufweist, die zwei Abteile (25, 38, 38a) des Behälters trennt.

7. Behälter nach einem der Ansprüche 1 bis 6, bei dem eine dichte Trennwand (36, 36a) ein Hauptabteil (25), das mit der Entleerungsöffnung des gelagerten Produkts in Verbindung steht, von einem sekundären Abteil (38, 38a) trennt, das nicht mit dieser Öffnung in Verbindung steht.

8. Behälter nach Anspruch 7, bei dem das sekundäre Abteil mit der Außenumgebung über eine sekundäre Öffnung (39) verbunden werden kann.

9. Behälter nach Anspruch 7 oder 8, bei dem das sekundäre Abteil konzipiert ist, um ein sekundäres Füllfluid aufzunehmen, dessen Dichte geringer ist als die Dichte des im Flug abzuwerfenden Produkts.

10. Behälter nach Anspruch 9, bei dem das sekundäre Füllfluid Luft ist.

11. Behälter nach einem der Ansprüche 7 bis 10, bei dem das sekundäre Abteil angeordnet ist, um den Hals zu bedecken, wenn die das Hauptabteil begrenze Wand (begrenzenden Wände) im Hals zusammengefaltet ist (sind).

12. Vorrichtung zur Lagerung eines von einem Luftfahrzeug (29), das eine Kabine (28) aufweist, transportierbaren Produkts, die aufweist:
- einen Behälter nach einem der Ansprüche 1 bis 11, und
- eine Haltestruktur (32, 34) des Behälters, wenn dieser im Inneren der Kabine entfaltet ist.

13. Vorrichtung nach Anspruch 12, bei der die Haltestruktur fadenförmige Verbindungen wie Gurte oder Netz(e) aufweist, die vorgesehen sind, um die verformbare Wand des Behälter mit dem Boden oder der Decke der Kabine zu verbinden.

14. Vorrichtung nach Anspruch 12 oder 13, bei der die Haltestruktur Einrichtungen (32) zur Aufrechterhaltung einer Neigung aufweist, um einen den Hals des Behälters umgebenden Abschnitt (33) der verformbaren Wand (Wände) in einer geneigten Stellung zu halten, die das Fließen des gelagerten Produkts zum Hals begünstigt.

15. Vorrichtung nach Anspruch 14, bei der die Einrichtungen zur Aufrechterhaltung der Neigung eine - eine Unterlage oder einen Keil bildende -Struktur aufweisen, die vorgesehen ist, um sich zwischen dem Boden (27) der Kabine und der Wand des Behälters in der Nähe des Halses zu erstrecken.

16. Vorrichtung nach Anspruch 15, bei der die Struktur zur Aufrechterhaltung der Neigung zumindest zum Teil aufblasbar und angeordnet ist, um den ganzen oder einen Teil des Halses des Behälters zu umgeben.

17. Vorrichtung nach einem der Ansprüche 12 bis 16, bei der die Haltestruktur Umschnürungseinrichtungen (34) aufweist, die konzipiert sind, um mindestens die Basis des Behälters zu umgeben und um - direkt oder indirekt - auf dem Boden der Kabine zu ruhen.

18. Vorrichtung nach Anspruch 17, bei der die Umschnürungseinrichtungen aufblasbar sind und mehrere übereinander liegende dichte Abteile aufweisen.

19. Vorrichtung nach einem der Ansprüche 15 bis 18, bei der die Einrichtung zur Aufrechterhaltung der Neigung einen oder mehrere Blöcke eines Materials mit Zellenstruktur aufweist.

20. Vorrichtung nach einem der Ansprüche 12 bis 19, bei der ein aufblasbares sekundäres Abteil des Behälters es ermöglicht, den Hals und/oder eine im Boden der Kabine geformte Öffnung (30) zu bedecken und/oder zu verschließen.

21. Luftfahrzeug (29), das einen Rumpf (31), eine Kabine (28), Rumpfwände, einen Kabinenboden (27) aufweist, wobei ein Unterflurraum oder -schacht (26) sich zwischen dem Boden der Kabine und den Rumpfwänden erstreckt, wobei das Luftfahrzeug mit einem Behälter nach einem der Ansprüche 1 bis 11 oder mit einer Vorrichtung nach einem der Ansprüche 12 bis 20 ausgestattet ist, wobei der Hals (23) des Behälters sich zumindest zum Teil im Unterflurraum oder -schacht erstreckt.

22. Luftfahrzeug nach Anspruch 21, das außerdem einen äußeren Ansaugkanal (46), der mit einer Pumpe (48) versehen ist, einen inneren Füllkanal (43) des Behälters, der den äußeren Ansaugkanal mit einer Füllöffnung verbindet, die in einer verformbaren Wand des Behälters vorgesehen ist, und ggf. einen Überlaufkanal (49) aufweist, der ebenfalls mit dem Behälter verbunden ist.
